# EUROPÄISCHE PATENTSCHRIFT

(11) **EP 2 458 946 B1**
(45) Veröffentlichungstag und Bekanntmachung des Hinweises auf die Patenterteilung: **19.12.2012**
(21) Anmeldenummer: 11008399.5
(22) Anmeldetag: 19.10.2011
(51) Int. Cl.: H05B 37/02, H02M 5/27, H04B 3/54, H04L 12/10

(54) **Kommunikationssystem zur Steuerung von elektrischen Lasten**
Communication system for controlling electrical loads
Système de communication pour la commande de charges électriques

(30) Priorität: 26.11.2010 DE 102010052661
(43) Veröffentlichungstag der Anmeldung: 30.05.2012
(73) Patentinhaber: ABB AG, 68309 Mannheim (DE)
(72) Erfinder: Goldyn, Dirk, 58454 Witten (DE); Czimmeck, Frank, 58511 Lüdenscheid (DE); Rümenapf, Peter, 44149 Dortmund (DE); Linde, Holger, 44137 Dortmund (DE); Madonna, Gian-Luigi, 8112 Otelfingen (CH); Cimino, Mikael, 5507 Mellingen (CH); Ruschival, Thomas, 68161 Mannheim (DE); Bloch, Richard, 6414 Oberarth (CH); Ecklebe, Andreas, 8953 Dietikon (CH)

(56) Entgegenhaltungen:
- EP-A1- 1 659 834
- EP-A2- 0 901 313
- WO-A2-96/08096

## Beschreibung

Die Erfindung betrifft ein Kommunikationssystem zur Steuerung von elektrischen Lasten, bei welchem Daten und Energie über ein und dieselbe Lastleitung übertragen werden, kurz ausgedrückt auf ein Lastleitungskommunikationssystem. Anwendungen finden solche Systeme beispielsweise in der Installationstechnik zur Helligkeitseinstellung oder Farbauswahl von Lampen respektive Leuchtmitteln.

Herkömmliche Systeme zur Helligkeitssteuerung von Lampen basieren in der Regel auf dem An- oder Abschnitt der Phase der Versorgungsspannung. Je nach Ausführungsart des Steuergerätes und der angeschlossenen Last können baubedingt im Steuergerät elektrische Verluste auftreten, die mit einer starken Wärmeentwicklung einhergehen können. Um dennoch große Lasten steuern zu können, wird das System daher typischerweise um eine oder mehrere Lasterweiterungsmodul(e) ergänzt. Der zuvor alleine durch das Steuergerät bereitgestellte Strom und damit die anfallende Verlustleistung teilt sich dann zwischen dem Steuergerät und das mindestens eine Lasterweiterungsmodul auf.
Die europäische Patentanmeldung EP 1 659 834 A1 offenbart ein System in der Form einer Dimmeranordnung mit einer Steuereinheit, die mit verschiedenen in parallel verbundenen Module angeschlossen ist.

Der Erfindung liegt die Aufgabe zugrunde, ein auch für größere Lasten geeignetes Kommunikationssystem zur Steuerung von elektrischen Lasten anzugeben.

Diese Aufgabe wird erfindungsgemäß gelöst durch ein Kommunikationssystem zur Steuerung von elektrischen Lasten respektive Lastmodulen,
- mit einem Steuergerät, das einerseits an den Phasenleiter einer Versorgungsspannungsquelle angeschlossen ist und dessen Ausgang eine Lastleitung für den Anschluss mindestens eines Lastmoduls bildet, welches andererseits mit dem Nulleiter der Versorgungsspannungsquelle verbunden ist,
- wobei das Steuergerät nur während periodisch zur Versorgungsspannung auftretenden Energieübertragungszeitfenstern Versorgungsstrom von der Versorgungsspannungsquelle an das mindestens eine Lastmodul zulässt und während eines mit den Energieübertragungszeitfenstern nicht überlappenden Kommunikationszeitfenstern eine bidirektionale Kommunikation durch Erfassen und/oder Modulieren eines Kommunikationsstromes über die Lastleitung zwischen dem Steuergerät und dem mindestens einen Lastmodul auftritt,
- wobei mindestens ein Lasterweiterungsmodul vorgesehen ist, welches einerseits mit dem Phasenleiter und andererseits mit der Lastleitung verbunden ist,
- und wobei das mindestens eine Lasterweiterungsmodul über eine Steuerleitung mit dem Steuergerät verbunden ist und derart angesteuert wird, dass während der Energieübertragungszeitfenster - nicht jedoch während der Kommunikationszeitfenster - Versorgungsstrom von der Versorgungsspannungsquelle an das mindestens eine Lastmodul zugelassen ist.

Die mit der Erfindung erzielbaren Vorteile bestehen insbesondere darin, dass größere Lasten in synchronisierter Art und Weise betrieben werden, wobei die Datenübertragung und die Energieübertragung zeitlich voneinander getrennt sind und eine bidirektionale Kommunikation mit Übertragung beliebiger Informationen zwischen dem Steuergerät und mehreren Lastmodulen über die gemeinsame Lastleitung möglich ist. Aus wirtschaftlichen Gründen kann beispielsweise die Auslegung des Steuergeräts auf verhältnismäßig geringe Lasten beschränkt sein, z. B. auf 500W, während die zusätzlich erforderliche Leistung durch mindestens ein Lasterweiterungsmodul bereitgestellt wird.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1: ein aus einem Steuergerät, mehreren Lastmodulen und mehreren Lasterweiterungsmodulen bestehendes Kommunikationssystem zur Steuerung von elektrischen Lasten,
- Fig. 2: den schematischen Aufbau eines Steuergerätes,
- Fig. 3: den schematischen Aufbau eines Lastmoduls,
- Fig. 4: den schematischen Aufbau eines Lasterweiterungsmoduls,
- Fig. 5: ein Ausführungsbeispiel des zeitlichen Verlaufs von Versorgungsspannung und Lastströmen bei gleichartiger Bauform von Steuergerät und Lasterweiterungsmodul.

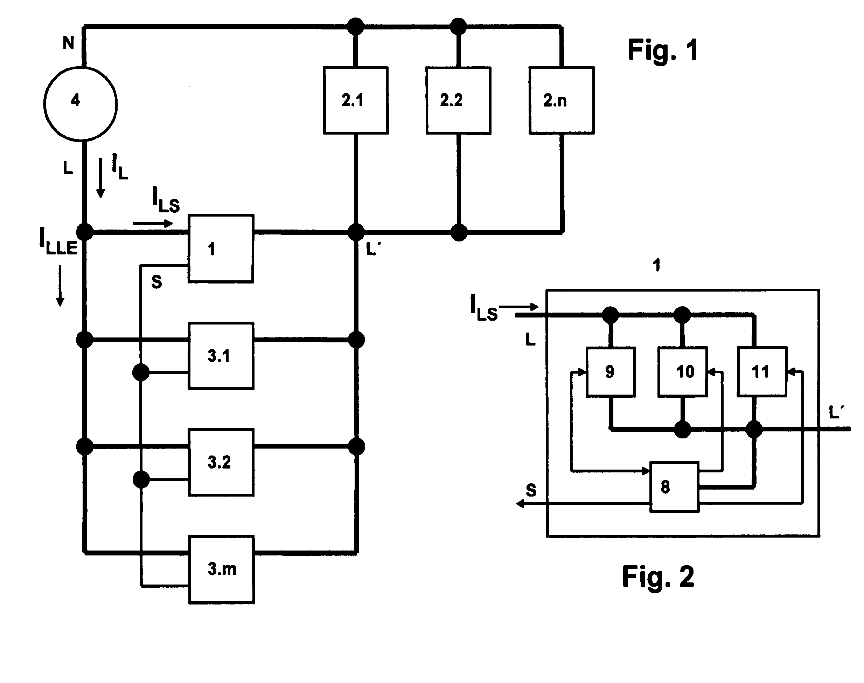

In Fig. 1 ist ein aus einem Steuergerät, mehreren Lastmodulen und mehreren Lasterweiterungsmodulen bestehendes Kommunikationssystem zur Steuerung von elektrischen Lasten dargestellt. Das Kommunikationssystem umfasst ein Steuergerät 1, welches in Serie mit n untereinander parallel verschalteten Lastmodulen 2.1, 2.2, ..... 2.n zwischen dem Phasenleiter L und dem Neutralleiter (Nulleiter) N einer Versorgungsspannungsquelle 4 verschaltet ist. Die Verbindungsleitung zwischen dem Steuergerät 1 und den Lastmodulen 2.1, 2.2, ..... 2.n stellt die Lastleitung L' dar. Die jeweils weiteren Anschlüsse der Lastmodule 2.1, 2.2, ..... 2.n liegen am Neutralleiter N. Zusätzlich sind parallel zum Steuergerät 1 mehrere Lasterweiterungsmodule 3.1, 3.2, ..... 3.m zwischen Phasenleiter L und Lastleitung L' verschaltet. Diese Lasterweiterungsmodule 3.1, 3.2, ..... 3.m sind mit dem Steuergerät 1 über eine Steuerleitung S verbunden. Die Ausführung dieser Steuerleitung S kann unterschiedlich gewählt sein,
- sie kann mehradrig sein,
- sie kann uni- oder bidirektional sein,
- sie kann als serieller Datenbus ausgeführt sein.

Der der Versorgungsspannungsquelle 4 entnommene Laststrom I_{L} teilt sich auf in einen Teilstrom I_{Ls} durch das Steuergerät 1 und einen Teilstrom I_{LLE} durch das mindestens eine Lasterweiterungsmodul 3.1, 3.2, ..... 3.m.

Sowohl das Steuergerät 1 als auch die Lasterweiterungsmodule 3.1, 3.2, ..... 3.m sind vorzugsweise derart ausgebildet, dass sie in handelsüblichen Unterputz-Gerätedosen (60 mm Durchmesser, 40 mm Tiefe) eingebaut werden können.

In Fig. 2 ist der schematische Aufbau eines Steuergerätes dargestellt. Das Steuergerät 1 umfasst einen Mikroprozessor 8, der mit einem Strommodem 9, einem Leistungsschalter 10 und einem Stromversorgungsblock 11 verbunden ist. Das Strommodem 9, der Leistungsschalter 10 und der Stromversorgungsblock 11 sind zueinander parallel zwischen Phasenleiter L der Netzleitung und Lastleitung L' geschaltet.

Der Stromversorgungsblock 11 dient dazu, dem Phasenleiter L bei Bedarf elektrische Energie u. a. zum Betreiben des Mikroprozessors 8, des Strommodems 9 und des Leistungsschalters 10 zu entnehmen. Der Stromversorgungsblock 11 wird von dem Mikroprozessor 8 angesteuert, so dass dem Phasenleiter L nur dann elektrische Energie entnommen wird, wenn dies durch den Mikroprozessor 8 vorgegeben wird. andernfalls bleibt der Stromversorgungsblock 11, zumindest während der Kommunikation zwischen Steuergerät 1 und Lastmodul 2.1, 2.2,.....2.n, in einem Zustand hoher Impedanz.

Das Strommodem 9 dient zum Überwachen des Laststroms respektive Teilstroms I_{LS} in dem Strompfad sowie dazu, eine gewünschte Impedanz einzustellen (Steuern und Überwachen des Stromniveaus), so dass die Kommunikation über die Lastleitung L' ermöglicht wird. Der Leistungsschalter 10 wird von dem Mikroprozessor 8 so gesteuert, dass dieser während einer über die Lastleitung L' stattfindenden Kommunikation geöffnet ist und zum Übertragen von elektrischer Energie an die Lastmodule 2.1, 2.2,.....2.n außerhalb eines Kommunikationsfensters während eines Energieübertragungszeitfensters EF geschlossen wird.

Mithilfe des Mikroprozessors 8 werden zum Übermitteln einer Information Datenbits durch Anpassen der Impedanz des Strommodems 9 moduliert, wobei der Laststrom während eines Kommunikationszeitfensters KF im Bereich zwischen einem minimalen Stromwert Iₘᵢₙ und einem maximalen Stromwert Iₘₐₓ durch ein vorgegebenes Modulationsverfahren durch geeignete Wechsel des Stromsignals geändert wird. Weiterhin kann das Strommodem 9 durch Messen eines Laststroms in einem Strompfad mithilfe des Mikroprozessors 8 Daten bzw. Informationen empfangen. Von Wichtigkeit ist des Weiteren der Anschluss der Steuerleitung S an den Mikroprozessor 8.

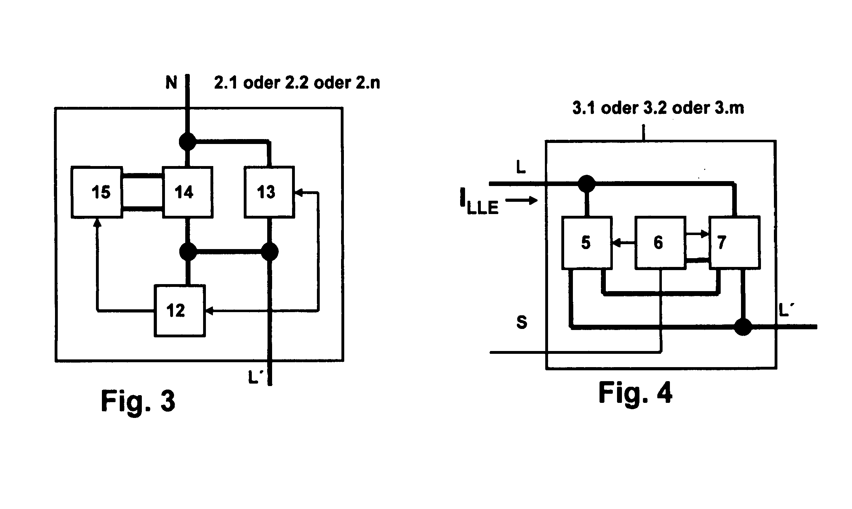

In Fig. 3 ist der schematische Aufbau eines Lastmoduls dargestellt. Das Lastmodul 2.1, 2.2,.....2.n umfasst einen Mikroprozessor 12, ein Strommodem 13, einen Leistungsblock 14 und eine Last 15. Das Strommodem 13 und der Leistungsblock 14 sind zwischen der Lastleitung L' und dem Nulleiter N der Netzleitung parallel geschaltet. Die Last 15 kann beispielsweise in Form einer Lampe oder eines sonstigen Verbrauchers ausgebildet sein.

Der Leistungsblock 14 dient dazu, elektrische Energie aus der Lastleitung L' zu entnehmen, um einerseits den Mikroprozessor 12 und das Strommodem 13 zu versorgen und andererseits die Last 15 zu betreiben. Wie oben für den Stromversorgungsblock 11 beschrieben, entnimmt der Leistungsblock 14 elektrische Energie, gesteuert durch den Mikroprozessor 12. Im Falle einer Lampe als Last 15 können Helligkeit bei einfarbiger Lampe oder Helligkeit und Farbe bei Farblampen variiert und eine Rückmeldung über den Status der Lampe (z. B. eine Information über einen Defekt in der Lampe, deren Leistungsaufnahme und dergleichen) von der Lampe erhalten werden.

In Fig. 4 ist der schematische Aufbau eines Lasterweiterungsmoduls dargestellt. Der innere Aufbau eines Lasterweiterungsmoduls 3.1, 3.2, ..... 3.m ähnelt dem Aufbau des Steuergeräts 1. Ein Lasterweiterungsmodul 3.1, 3.2, ..... 3.m weist einen Leistungsschalter 5, ein Netzteil 7 sowie einen Mikroprozessor 6 auf, jedoch kein Modem. Der Leistungsschalter 5 und das Netzteil 7 sind mit dem Phasenleiter L und der Lastleitung L' verbunden. Der Mikroprozessor 6 ist an die Steuerleitung S angeschlossen und steuert den Leistungsschalter 5 und das Netzteil 7 an.

Der Leistungsschalter 5 wird während des Energieübertragungsfensters EF geschlossen. Somit fließt zu dieser Zeit ein Laststrom I_{LLE} über das mindestens eine Lasterweiterungsmodul 3.1, 3.2, ..... 3.m. Der Leistungsschalter 5 ist zu jeder anderen Zeit offen. Das Netzteil 7 dient der Versorgung des Mikroprozessors 6. Der Mikroprozessor 6 wertet die Steuersignale des Steuergeräts 1 derart aus, dass das mindestens eine Lasterweiterungsmodul über die eine oder mehrere dezidierte Steuerleitung(en) S mit dem Steuergerät 1 synchronisiert wird.

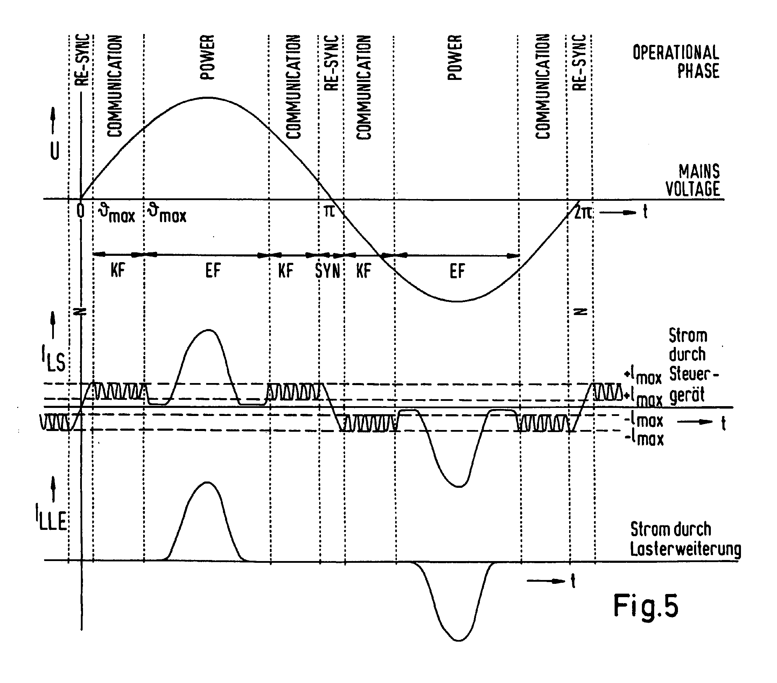

In Fig. 5 ist ein Ausführungsbeispiel des zeitlichen Verlaufs von Versorgungsspannung (Netzspannung) und Lastströmen respektive Teilströmen bei gleichartiger Bauform von Steuergerät und Lasterweiterungsmodul dargestellt. Beim betrachteten Kommunikationssystem wird jede Periode der Versorgungsspannung U zeitlich unterteilt in
- ein Kommunikationszeitfenster KF
- ein Energieübertragungszeitfenster (Energieübertragungsphase) EF.

Darüber hinaus ist für jeden Polaritätswechsel der Versorgungsspannung U ein Synchronisationszeitfenster SYN vorgesehen.

Während des Kommunikationszeitfensters KF werden Daten vom Steuergerät 1 an ein Lastmodul (Unicast) oder mehrere Lastmodule 2.1, 2.2, ..... 2.n (Multicast) oder von mindestens einem Lastmodul 2.1, 2.2, ..... 2.n an das Steuergerät 1 gesendet, d. h. es ist eine bidirektionale Kommunikation möglich. Innerhalb des Kommunikationszeitfensters KF werden die Datenbits gemäß einem vorgegebenen Modulationsverfahren durch geeigneten Wechsel eines Stromsignals zwischen einem maximalen Stromwert +Iₘₐₓ bei positiver Netzhalbwelle und einem minimalen Stromwert +Iₘᵢₙ bei positiver Netzhalbwelle sowie zwischen einem maximalen Stromwert -Iₘₐₓ bei negativer Netzhalbwelle und einem minimalen Stromwert -Iₘᵢₙ bei negativer Netzhalbwelle repräsentiert.

Während des Energieübertragungszeitfensters EF werden die Lastmodule 2.1, 2.2, ..... 2.n mit elektrischer Energie versorgt, welche in der Regel in einem Energiespeicher gepuffert wird. Die Lasterweiterungsmodule 3.1, 3.2, ..... 3.m, welche über die Steuerleitung S mit dem Steuergerät 1 synchronisiert sind, sind während des Energieübertragungszeitfensters EF aktiv. Für die Dauer des Kommunikationszeitfensters KF verhalten sie sich hochohmig zwischen der Phase L und der Lastleitung L'. Somit beeinträchtigen sie die Kommunikation zwischen dem Steuergerät 1 und den Lastmodulen 2.1, 2.2, ..... 2.n in keiner Weise.

Während des Energieübertragungsfensters EF teilt sich der Laststrom I_{L}, also der Gesamtstrom durch alle Lasten, auf in einen Teilstrom I_{LS} durch das Steuergerät 1 und einen Teilstrom I_{LLE} durch mindestens ein Lasterweiterungsmodul 3.1, 3.2,.....3.m. Die Lastverteilung zwischen Steuergerät und die Lasterweiterungsmodule 3.1, 3.2,.....3.m kann auf unterschiedliche Arten erfolgen, von denen nachstehend drei Arten erläutert werden:
A) Sind alle Leistungsschalter 10, 5, sowohl im Steuergerät 1 als auch in den Lasterweiterungsmodulen 3.1, 3.2, .....3.m, identisch ausgelegt, so wird sich der Laststrom I_{L} zu gleichen Teilen aufteilen. Dies ist je nach Ausführungsform jedoch nicht immer zweckmäßig.
B) Eine ungleiche Aufteilung des Laststroms I_{L} kann durch unterschiedliche Durchgangswiderstände in den Leistungsschaltern erreicht werden. Soll etwa der Teilstrom I_{LLE} durch die Lasterweiterungsmodule 3.1, 3.2,.....3.m größer sein als der Teilstrom I_{LS} durch das Steuergerät 1, so ist hierfür ein Leistungsschalter 5 mit einem Durchgangswiderstand zu wählen, der geringer ist als derjenige des Leistungsschalters 10 im Steuergerät 1.
C) Statt den Laststrom I_{L} zwischen Steuergerät 1 und den Lasterweiterungsmodulen 3.1, 3.2,.....3.m aufzuteilen kann das Steuergerät 1 auch während des Energieübertragungszeitfensters EF hochohmig bleiben. In einem solchen Fall würde sich der Laststrom I_{L} ausschließlich auf die Lasterweiterungsmodule 3.1, 3.2,.....3.m aufteilen, d. h. I_{L} = I_{LLE} und es gilt I_{LS} = 0 . Dies kann je nach Ausführungsform von Vorteil sein.

Beim in Fig. 5 dargestellten Verlauf des Laststroms I_{L} in einen Teilstrom I_{LS} durch ein Steuergerät 1 und einen Teilstrom I_{LLE} durch das dazu parallel geschaltete Lasterweiterungsmodul 3.1 ist der Fall A) vorausgesetzt, bei welchem der Durchgangswiderstand von Steuergerät 1 und Lasterweiterungsmodul 3.1 gleich ist und daher gilt I_{LLE} = I_{LS}.

### Bezugszeichenliste

- 1: Steuergerät
- 2.1, 2.2, 2.n: erstes Lastmodul, zweites Lastmodul, n-tes Lastmodul
- 3.1, 3.2, 3.m: erstes Lasterweiterungsmodul, zweites Lasterweiterungsmodul, m-tes Lasterweiterungsmodul
- 4: Versorgungsspannungsquelle
- 5: Leistungsschalter
- 6: Mikroprozessor
- 7: Netzteil
- 8: Mikroprozessor
- 9: Strommodem
- 10: Leistungsschalter
- 11: Stromversorgungsblock
- 12: Mikroprozessor
- 13: Strommodem
- 14: Leistungsblock
- 15: Last
- EF: Energieübertragungszeitfenster
- +Iₘₐₓ: maximaler Stromwert bei positiver Netzhalbwelle
- +Iₘᵢₙ: minimaler Stromwert bei positiver Netzhalbwelle
- -Iₘₐₓ: maximaler Stromwert bei negativer Netzhalbwelle
- -Iₘᵢₙ: minimaler Stromwert bei negativer Netzhalbwelle
- I_{L}: Laststrom (Gesamtstrom)
- I_{LS}: Laststrom durch Steuergerät
- I_{LLE}: Laststrom durch Lasterweiterungsmodul(e)
- KF: Kommunikationszeitfenster
- L: Phasenleiter der Versorgungsspannungsquelle
- L': Lastleitung
- N: Neutralleiter (Nulleiter) der Netzleitung
- S: Steuerleitung
- SYN: Synchronisationszeitfenster
- U: Versorgungsspannung, Netzspannung

## Patentansprüche

1. Kommunikationssystem zur Steuerung von elektrischen Lasten respektive Lastmodulen (2.1, 2.1, 2.n), mit einem Steuergerät (1), das einerseits an den Phasenleiter (L) einer Versorgungsspannungsquelle (4) angeschlossen ist und dessen Ausgang eine Lastleitung (L') für den Anschluss mindestens eines Lastmoduls (2.1, 2.1, 2.n) bildet, welches andererseits mit dem Nulleiter (N) der Versorgungsspannungsquelle (4) verbunden ist, **dadurch gekennzeichnet,**
• **dass** das Steuergerät (1) nur während periodisch zur Versorgungsspannung (U) auftretenden Energieübertragungszeitfenstern (EF) Versorgungsstrom von der Versorgungsspannungsquelle (4) an das mindestens eine Lastmodul (2.1, 2.1, 2.n) zulässt und während mit den Energieübertragungszeitfenstern (EF) nicht überlappenden Kommunikationszeitfenstern (KF) eine bidirektionale Kommunikation durch Erfassen und/oder Modulieren eines Kommunikationsstromes über die Lastleitung (L') zwischen dem Steuergerät (1) und dem mindestens einen Lastmodul (2.1, 2.1, 2.n) auftritt,
• **dass** mindestens ein Lasterweiterungsmodul (3.1, 3.2, 3.m) vorgesehen ist, welches einerseits mit dem Phasenleiter (L) und andererseits mit der Lastleitung (L') verbunden ist,
• und **dass** das mindestens eine Lasterweiterungsmodul (3.1, 3.2, 3.m) über eine Steuerleitung (S) mit dem Steuergerät (1) verbunden ist und derart angesteuert wird, dass während der Energieübertragungszeitfenster (EF) - nicht jedoch während der Kommunikationszeitfenster (KF) - Versorgungsstrom von der Versorgungsspannungsquelle (4) an das mindestens eine Lastmodul (2.1, 2.1, 2.n) zugelassen ist.

2. Kommunikationssystem nach Anspruch 1, **dadurch gekennzeichnet, dass** das Steuergerät (1) einen mit der Steuerleitung (S) verbundenen Mikroprozessor (8) umfasst, der mit einem zum Erfassen eines Kommunikationsstromes dienenden Strommodem (9), einem zum Modulieren eines Kommunikationsstromes dienenden Leistungsschalter (10) und einem den Versorgungsstrom schaltenden Stromversorgungsblock (11) verbunden ist.

3. Kommunikationssystem nach Anspruch 1, **dadurch gekennzeichnet, dass** ein Lasterweiterungsmodul (3.1, 3.2, 3.m) einen den Versorgungsstrom schaltenden Leistungsschalter (5) und einen mit der Steuerleitung (S) verbundenen Mikroprozessor (6) zur Ansteuerung dieses Leistungsschalters (5) aufweist.

4. Kommunikationssystem nach Anspruch 1, **dadurch gekennzeichnet, dass** das Lastmodul (2.1, 2.2, 2.n) einen Mikroprozessor (12), ein zum Erfassen eines Kommunikationsstromes dienendes Strommodem (13) und einen Leistungsblock (14) zum Speisen einer vorzugsweise als Lampe ausgebildeten Last (15) umfasst.

## Claims

1. Communication system for controlling electrical loads or load modules (2.1, 2.2, 2.n), having a controller (1), which is firstly connected to the phase conductor (L) of a supply voltage source (4) and the output of which forms a load line (L') for the connection of at least one load module (2.1, 2.2, 2.n), and which is secondly connected to the neutral conductor (N) of the supply voltage source (4), **characterized**
• **in that** the controller (1) admits supply current from the supply voltage source (4) to the at least one load module (2.1, 2.2, 2.n) only during power transmission time windows (EF) which occur periodically with respect to the supply voltage (U), and communication time windows (KF) which do not overlap the power transmission time windows (EF) involve bidirectional communication by virtue of the capture and/or modulation of a communication stream via the load line (L') between the controller (1) and the at least one load module (2.1, 2.2, 2.n),
• **in that** at least one load expansion module (3.1, 3.2, 3.m) is provided which is connected firstly to the phase conductor (L) and secondly to the load line (L'),
• and **in that** the at least one load expansion module (3.1, 3.2, 3.m) is connected to the controller (1) by means of a control line (S) and is actuated such that during the power transmission time windows (EF) - but not during the communication time windows (KF) - supply current from the supply voltage source (4) is admitted to the at least one load module (2.1, 2.2, 2.n).

2. Communication system according to Claim 1, **characterized in that** the controller (1) comprises a microprocessor (8) which is connected to the control line (S) and which is connected to a powerline modem (9) used for capturing a communication stream, to a circuit breaker (10) used for modulating a communication stream and to a power supply block (11) which switches the supply current.

3. Communication system according to Claim 1, **characterized in that** a load expansion module (3.1, 3.2, 3.m) has a circuit breaker (5) which switches the supply current and a microprocessor (6), connected to the control line (S), for actuating this circuit breaker (5).

4. Communication system according to Claim 1, **characterized in that** the load module (2.1, 2.2, 2.n) comprises a microprocessor (12), a powerline modem (13) used for capturing a communication stream and a power block (14) for supplying power to a load (15), which is preferably in the form of a lamp.

## Revendications

1. Système de communications destiné à commander des charges électriques ou des modules de charge respectifs (2.1, 2.2, 2.n), comportant un appareil de commande (1) qui est d'une part relié au conducteur de phase (L) d'une source de tension d'alimentation (4) et dont la sortie forme un conducteur de charge (L') pour le raccordement d'au moins un module de charge (2.1, 2.2, 2.n), qui est d'autre part connecté au conducteur neutre (N) de la source de tension d'alimentation (4), **caractérisé**
• **en ce que** l'appareil de commande (1) ne laisse passer un courant d'alimentation de la source de tension d'alimentation (4) vers l'au moins un module de charge (2.1, 2.2, 2.n) que pendant des fenêtres temporelles de transmission d'énergie (EF) apparaissant périodiquement sur la tension d'alimentation (U) et en ce qu'une communication bidirectionnelle se produit pendant des fenêtres temporelles de communication (KF) ne se chevauchant pas avec les fenêtres temporelles de transmission d'énergie (EF) par détection et/ou modulation d'un courant de communication par l'intermédiaire du conducteur de charge (L') entre l'appareil de commande (1) et l'au moins un module de charge (2.1, 2.2, 2.n),
• **en ce qu'**il est prévu au moins un module d'augmentation de la charge (3.1, 3.2, 3.m) qui est connecté d'une part au conducteur de phase (L) et d'autre part au conducteur de charge (L'), s
• et **en ce que** l'au moins un module d'augmentation de la charge (3.1, 3.2, 3.m) est connecté par l'intermédiaire d'un conducteur de commande (S) à l'appareil de commande (1) et est commandé de telle manière que pendant les fenêtres temporelles de transmission d'énergie (EF) - et non pas pendant les fenêtres temporelles de communication (KF) - un courant est admis à passer de la source de tension d'alimentation (4) vers l'au moins un module de charge (2.1, 2.2, 2.n).

2. Système de communication selon la revendication 1, **caractérisé en ce que** l'appareil de commande (1) comprend un microprocesseur (8) connecté au conducteur de commande (S), lequel microprocesseur est connecté à un modem de courant (9) destiné à détecter un courant de communication, à un disjoncteur de puissance (10) destiné à moduler un courant de communication et à un bloc d'alimentation en courant (11) commutant le courant d'alimentation.

3. Système de communication selon la revendication 1, **caractérisé en ce qu'**un module d'augmentation de la charge (3.1, 3.2, 3.m) comprend un disjoncteur de puissance (5) commutant le courant d'alimentation et un microprocesseur (6) connecté au conducteur de commande (S) pour commander ce disjoncteur de puissance (5).

4. Système de communication selon la revendication 1, **caractérisé en ce que** le module de charge (2.1, 2.2, 2.n) comprend un microprocesseur (12), un modem de courant (13) destiné à détecter un courant de communication et un bloc de puissance (14) destiné à alimenter une charge (15) présentant de préférence la forme d'une lampe.
